# EUROPEAN PATENT APPLICATION

(11) **EP 4 841 719 A1**
(43) Date of publication of application: **18.11.2026**
(21) Application number: 25738419.8
(22) Date of filing: 07.01.2025
(51) Int. Cl.: H01M 4/66, H01M 4/13, H01M 10/0525, H01M 10/42

(54) **ELECTRODE SHEET, BATTERY CELL, AND ELECTRICAL DEVICE**

(30) Priority: 08.01.2024 CN 202410027254
(71) Applicant: Ningde Amperex Technology Limited, Ningde, Fujian 352100 (CN)
(72) Inventor: YAN, Jiaxiao, Ningde, Fujian 352100 (CN)
(74) Representative: Dehns Germany Partnerschaft mbB
(86) International application number: PCT/CN2025/071109
(87) International publication number: WO 2025/148889

(57) **Abstract**

An electrode plate, a battery cell, and an electric device are provided. The electrode plate includes a current collector (300), two active material layers, and two transition layers. The current collector (300) includes a support layer (10), as well as a first conductive layer (11) and a second conductive layer (12) disposed on two sides of the support layer (10) in a first direction. One active material layer (102) is disposed on a side of the first conductive layer (11) facing away from the support layer (10), and the other active material layer (102) is disposed on a side of the second conductive layer (12) facing away from the support layer (10). One transition layer (22) is disposed between at least a portion of the first conductive layer (11) and the corresponding active material layer (102) and protrudes beyond the active material layer (102) along a second direction, and the other transition layer (22) is disposed between at least a portion of the second conductive layer (12) and the corresponding active material layer (102) and protrudes beyond the active material layer (102) along the second direction. The active material layer (102) includes active material particles, where an average particle size of the active material particles is 5 µm to 20 µm. The transition layer includes solid particles, where an average particle size of the solid particles is 500 nm to 1500 nm. The above electrode plate can enhance the structural strength.

## Description

This application claims priority to Chinese Patent Application No. 202410027254.6, filed on January 8, 2024 and entitled "ELECTRODE PLATE, BATTERY CELL, AND ELECTRIC DEVICE".

### TECHNICAL FIELD

This application relates to the field of energy storage technology, in particular to an electrode plate, a battery cell, and an electric device.

### BACKGROUND

Existing composite current collectors have a three-layer sandwich structure, with a central polymer layer and outer metal layers. The metal layers are configured to be coated with an active material layer and are compacted through cold pressing to form an electrode plate. Active material particles with a larger average particle size in the active material layer are likely to cause compressive damage to the metal layer, affecting the structural strength of the electrode plate.

### SUMMARY

In view of the above issue, this application provides an electrode plate capable of enhancing the structural strength.

An embodiment of this application provides an electrode plate. The electrode plate includes a current collector, two active material layers, and two transition layers. The current collector includes a support layer, as well as a first conductive layer and a second conductive layer disposed on two sides of the support layer in a first direction, where the first direction is a thickness direction of the current collector. One active material layer is disposed on a side of the first conductive layer facing away from the support layer, and the other active material layer is disposed on a side of the second conductive layer facing away from the support layer. One transition layer is disposed between at least a portion of the first conductive layer and the corresponding active material layer, and the other transition layer is disposed between at least a portion of the second conductive layer and the corresponding active material layer. The active material layer includes active material particles, where an average particle size of the active material particles is 5 µm to 20 µm. The transition layer includes solid particles, where the solid particles include at least one of aluminum oxide, silicon oxide, silicon carbide, tin oxide, indium oxide, titanium dioxide, cobalt oxide, chromium trioxide, boehmite, amorphous carbon, lithium phosphorus oxynitride, and titanium diboride, and an average particle size of the solid particles is 500 nm to 1500 nm.

In the above electrode plate, the solid particles, compared to the active material particles, are less prone to swelling upon contact with an electrolyte, enabling the transition layer to buffer deformation caused by the swelling of the corresponding active material layer. By specifying the average particle size of the active material particles as 5 µm to 20 µm, the cycling performance, energy density, and lithium precipitation resistance of the electrode plate are improved. By specifying the average particle size of the solid particles as 500 nm to 1500 nm, production costs are controlled, and interface resistance is reduced. Additionally, the average particle size of the solid particles being smaller than that of the active material particles helps the solid particles to provide a buffer function between the active material particles and the current collector, reducing the risk of compressive damage to the first conductive layer or the second conductive layer due to direct contact between active material particles with a larger average particle size and the current collector, and enhancing the structural strength of the electrode plate.

In some embodiments of this application, along a second direction, the transition layer protrudes beyond a peripheral edge of the corresponding active material layer, where the second direction is perpendicular to the first direction.

In the above solution, one transition layer is disposed between at least a portion of the first conductive layer and the corresponding active material layer and protrudes beyond the peripheral edge of the corresponding active material layer along the second direction, and the other transition layer is disposed between at least a portion of the second conductive layer and the corresponding active material layer and protrudes beyond the peripheral edge of the corresponding active material layer along the second direction, so that a portion of the transition layer corresponding to an edge of the active material layer mitigates shear force experienced by a corresponding position of the current collector during cold pressing, thereby reducing the risk of damage to the current collector due to excessively large shear force and enhancing the structural strength of the electrode plate.

In some embodiments of this application, the average particle size of the active material particles is 5 µm to 15 µm, and the average particle size of the solid particles is 500 nm to 1500 nm, to further improve the cycling performance, energy density, and lithium precipitation resistance of the electrode plate, thereby further controlling production costs, reducing interface resistance, and further helping the solid particles to provide a buffer function between the active material particles and the current collector, so that the risk of compressive damage to the first conductive layer or the second conductive layer due to direct contact between active material particles with a larger average particle size and the current collector is reduced, and the structural strength of the electrode plate is enhanced.

In some embodiments of this application, the average particle size of the active material particles is 10 µm to 15 µm to further improve the cycling performance, energy density, and lithium precipitation resistance of the electrode plate. The average particle size of the solid particles is 800 nm to 1000 nm to further control production costs, reduce interface resistance, and further help the solid particles to provide a buffer function between the active material particles and the current collector, reducing the risk of compressive damage to the first conductive layer or the second conductive layer due to direct contact between active material particles with a larger average particle size and the current collector, and enhancing the structural strength of the electrode plate.

In some embodiments of this application, a compacted density of the active material layer is 3 g/cm³ to 4.5 g/cm³, and a compacted density of the transition layer is 1.6 g/cm³ to 3 g/cm³. The active material layer and the corresponding transition layer are cold-pressed simultaneously, and the material difference between the active material layer and the transition layer results in different compacted densities for the active material layer and the transition layer. During cold pressing, the compacted density of the active material layer is primarily considered. When the compacted density of the active material layer is too low (less than 3 g/cm³), it is likely to result in an excessively low energy density of the electrode plate. When the compacted density of the active material layer is too high (greater than 4.5 g/cm³), it is likely to cause the current collector to experience excessively large shear force and thus causes the risk of damage, affecting the structural strength of the electrode plate, and the excessively high compacted density is also likely to reduce ion transport channels, affecting the cycling performance of the electrode plate. By specifying the compacted density of the active material layer as 3 g/cm³ to 4.5 g/cm³, the energy density and cycling performance of the electrode plate are improved, and the risk of damage to the current collector due to excessively large shear force is reduced.

In some embodiments of this application, the compacted density of the active material layer is 4.1 g/cm³ to 4.3 g/cm³, and the compacted density of the transition layer is 2.2 g/cm³ to 2.4 g/cm³, to further improve the energy density and cycling performance of the electrode plate and reduce the risk of damage to the current collector due to excessively large shear force.

In some embodiments of this application, the transition layer includes a connecting portion and an extending portion connected to each other. Along the first direction, a projection of the connecting portion overlaps with a projection of the corresponding active material layer, which helps to reduce the risk of compressive damage to the first conductive layer or the second conductive layer due to direct contact between the active material particles and the current collector, and enhance the structural strength of the electrode plate. A projection of the extending portion surrounds a peripheral side of a projection of the corresponding active material layer, and the projection of the extending portion is further located within a projection of the current collector, so that the portion of the transition layer corresponding to the edge of the active material layer mitigates shear force experienced by the corresponding position of the current collector during cold pressing, thereby reducing the risk of damage to the current collector due to excessively large shear force and enhancing the structural strength and electrical conductivity of the electrode plate.

In some embodiments of this application, the connecting portion is provided with a through hole extending through the connecting portion along the first direction, the active material layer passes through the through hole and is connected to the corresponding first conductive layer or second conductive layer, and along the first direction, a projection of the through hole is located within a projection range of the corresponding active material layer. An edge portion of the active material layer applies greater shear force to the current collector during cold pressing compared to other portions of the current collector. By providing the through hole, the transition layer adapts to a portion of the current collector subjected to greater shear force, to reduce the risk of compressive damage to the first conductive layer or the second conductive layer due to direct contact between the active material particles at the edge of the active material layer and the current collector, and mitigate shear force experienced by the corresponding position of the current collector during cold pressing, thereby reducing the risk of damage to the current collector due to excessively large shear force.

In some embodiments of this application, along the first direction, a projection overlap region of the connecting portion and the corresponding active material layer includes an inner periphery and an outer periphery, the outer periphery surrounds a peripheral side of the inner periphery, and a distance L5 between the inner periphery and the outer periphery satisfies: 0 < L5 ≤ 1 mm. Since the edge of the active material layer experiences large stress, providing the transition layer at the edge position facilitates buffering between the edge of the active material layer and the current collector, and helps to increase a volume of a portion where the active material layer passes through the through hole, thereby increasing the volume of a thicker portion of the active material layer and increasing the energy density of the electrode plate.

In some embodiments of this application, 0 < L5 ≤ 0.5 mm, to further help to increase the volume of the portion where the active material layer passes through the through hole, thereby increasing the volume of the thicker portion of the active material layer and increasing the energy density of the electrode plate.

In some embodiments of this application, the current collector includes two first end surfaces disposed opposite each other along the second direction, the active material layer includes two second end surfaces disposed opposite each other along the second direction, and the transition layer includes two third end surfaces disposed opposite each other along the second direction. Along the second direction, among the first end surface, the second end surface, and the third end surface located on one side of the active material layer, the current collector between the first end surface and the third end surface forms an uncoated foil region for connection of an electrode terminal, and the transition layer between the second end surface and the third end surface is a portion of the extending portion. A distance L1 between the first end surface and the third end surface satisfies: 0.2 mm ≤ L1 ≤ 1.8 mm, to define an area of the uncoated foil region. When L1 is too small (less than 0.2 mm), it is likely to result in a small connection area between the uncoated foil region and the electrode terminal, leading to the risk of weak connection strength. When L1 is too large (greater than 1.8 mm), it leads to excessive space occupation by the uncoated foil region in the second direction X, causing space waste and thus affecting the energy density of the electrode plate. By specifying 0.2 mm ≤ L1 ≤ 1.8 mm, the connection strength between the uncoated foil region and the electrode terminal is enhanced, and space waste caused by the uncoated foil region in the second direction is reduced, facilitating an increase in the energy density of the electrode plate. A distance L2 between the second end surface and the third end surface satisfies: 0 < L2 ≤ 1.5 mm, helping to visually check whether the transition layer protrudes beyond the peripheral edge of the corresponding active material layer along the second direction and to reduce space waste caused by excessive space occupation by the extending portion in the second direction.

In some embodiments of this application, 0.4 mm ≤ L1 ≤ 0.6 mm, to further enhance the connection strength between the uncoated foil region and the electrode terminal and reduce space waste caused by the uncoated foil region in the second direction, facilitating an increase in the energy density of the electrode plate. 0.2 mm ≤ L2 ≤ 0.5 mm, which further helps to visually check whether the transition layer protrudes beyond the peripheral edge of the corresponding active material layer along the second direction and to reduce space waste caused by excessive space occupation by the extending portion in the second direction.

In some embodiments of this application, the current collector includes two fourth end surfaces disposed opposite each other along a third direction, the active material layer includes two fifth end surfaces disposed opposite each other along the third direction, and the transition layer includes two sixth end surfaces disposed opposite each other along the third direction, where the first direction, the second direction, and the third direction are perpendicular to each other. Along the third direction, among the fourth end surface, the fifth end surface, and the sixth end surface located on another side of the active material layer, the current collector between the fourth end surface and the sixth end surface forms an uncoated foil region for connection of an electrode terminal, and the transition layer between the fifth end surface and the sixth end surface is a portion of the extending portion. A distance L3 between the fourth end surface and the sixth end surface satisfies: 0.2 mm ≤ L3 ≤ 1.8 mm, to define an area of the uncoated foil region. When L3 is too small (less than 0.2 mm), it is likely to result in a small connection area between the uncoated foil region and the electrode terminal, leading to the risk of weak connection strength. When L3 is too large (greater than 1.8 mm), it leads to excessive space occupation by the uncoated foil region in the second direction X, causing space waste and thus affecting the energy density of the electrode plate. By specifying 0.2 mm ≤ L3 ≤ 1.8 mm, the connection strength between the uncoated foil region and the electrode terminal is enhanced, and space waste caused by the uncoated foil region in the third direction is reduced, facilitating an increase in the energy density of the electrode plate. A distance L4 between the fifth end surface and the sixth end surface satisfies: 0 < L4 ≤ 1.5 mm, which helps to visually check whether the transition layer protrudes beyond the peripheral edge of the corresponding active material layer along the third direction and to reduce space waste caused by excessive space occupation by the extending portion in the third direction.

In some embodiments of this application, 0.4 mm ≤ L3 ≤ 0.6 mm, to further enhance the connection strength between the uncoated foil region and the electrode terminal and reduce space waste caused by the uncoated foil region in the third direction, facilitating an increase in the energy density of the electrode plate. 0.2 mm ≤ L4 ≤ 0.5 mm, which further helps to visually check whether the transition layer protrudes beyond the peripheral edge of the corresponding active material layer along the third direction and to reduce space waste caused by excessive space occupation by the extending portion in the third direction.

In some embodiments of this application, along the first direction, a thickness H1 of the current collector satisfies: 4 µm ≤ H1 ≤ 16 µm, to meet the structural strength requirements of the current collector and reduce space waste caused by the current collector, facilitating an increase in the energy density of the electrode plate. A thickness H2 of the transition layer satisfies: 0.5 µm ≤ H2 ≤ 3 µm, to improve the buffering performance and bonding strength of the transition layer and reduce space waste caused by the transition layer, facilitating an increase in the energy density of the electrode plate. A thickness H3 of the active material layer satisfies: 60 µm ≤ H3 ≤ 160 µm, to control an internal resistance of the electrode plate and reduce space waste caused by the active material layer, facilitating an increase in the energy density of the electrode plate.

In some embodiments of this application, 7 µm ≤ H1 ≤ 9 µm, to further meet the structural strength requirements of the current collector and reduce space waste caused by the current collector, facilitating an increase in the energy density of the electrode plate. 1 µm ≤ H2 ≤ 1.5 µm, which is to further control the buffering performance and bonding strength of the transition layer and reduce space waste caused by the transition layer, facilitating an increase in the energy density of the electrode plate. 90 µm ≤ H3 ≤ 110 µm, which is to further control the internal resistance of the electrode plate and reduce space waste caused by the active material layer, facilitating an increase in the energy density of the electrode plate.

In some embodiments of this application, a resistance R of the transition layer satisfies: 1 mohm ≤ R ≤ 20 mohm, to improve the electrical conductivity of the transition layer.

An embodiment of this application further provides a battery cell, where the battery cell includes an electrode assembly, and the electrode assembly includes any one of the electrode plates described in the above embodiments.

An embodiment of this application further provides an electric device, including any one of the electrode plates described in the above embodiments or any one of the battery cells described in the above embodiments.

In the above electrode plate, battery cell, and electric device, one transition layer is disposed between at least a portion of the first conductive layer and the corresponding active material layer and protrudes beyond the peripheral edge of the corresponding active material layer along the second direction, and the other transition layer is disposed between at least a portion of the second conductive layer and the corresponding active material layer and protrudes beyond the peripheral edge of the corresponding active material layer along the second direction, so that a portion of the transition layer corresponding to the edge of the active material layer mitigates shear force experienced by the corresponding position of the current collector during cold pressing, thereby reducing the risk of damage to the current collector due to excessively large shear force and enhancing the structural strength of the electrode plate. By specifying the average particle size of the active material particles as 5 µm to 20 µm, the cycling performance, energy density, and lithium precipitation resistance of the electrode plate are improved. The solid particles, compared to the active material particles, are less prone to swelling upon contact with an electrolyte, enabling the transition layer to buffer deformation caused by the swelling of the corresponding active material layer. By specifying the average particle size of the solid particles as 500 nm to 1500 nm, production costs are controlled, and interface resistance is reduced. Additionally, the average particle size of the solid particles being smaller than that of the active material particles helps the solid particles to provide a buffer function between the active material particles and the current collector, reducing the risk of compressive damage to the first conductive layer or the second conductive layer due to direct contact between active material particles with a larger average particle size and the current collector, and enhancing the structural strength of the electrode plate.

### BRIEF DESCRIPTION OF DRAWINGS

FIG. 1 is a schematic planar diagram of an electrode plate according to an embodiment of this application.
FIG. 2 is a cross-sectional view of FIG. 1 along section line A-A.
FIG. 3 is a schematic planar diagram of an electrode plate according to another embodiment of this application.
FIG. 4 is a cross-sectional view of FIG. 3 along section line B-B.
FIG. 5 is a schematic diagram showing an arc-shaped projection of a hole wall of a through hole of an electrode plate according to an embodiment of this application.
FIG. 6 is a schematic diagram showing a wavy projection of a hole wall of a through hole of an electrode plate according to an embodiment of this application.
FIG. 7 is a schematic diagram showing a zigzag projection of a hole wall of a through hole of an electrode plate according to an embodiment of this application.
FIG. 8 is a schematic structural diagram of a battery cell according to an embodiment of this application.
FIG. 9 is a schematic structural diagram of an electric device according to an embodiment of this application.

**Description of reference signs of main components**

| | |
|---|---|
| Electrode plate | 100a, 100b |
| Battery cell | 200 |
| Electric device | 300 |
| Current collector | 10 |
| Support layer | 11 |
| First conductive layer | 12 |
| Second conductive layer | 13 |
| First end surface | 101 |
| Fourth end surface | 102 |
| Active material layer | 20 |
| Second end surface | 21 |
| Fifth end surface | 22 |
| Transition layer | 30 |
| Connecting portion | 31 |
| Through hole | 311 |
| Extending portion | 32 |
| Third end surface | 301 |
| Sixth end surface | 302 |
| Projection overlap region | 40 |
| Inner periphery | 41 |
| Outer periphery | 42 |
| Electrode assembly | 201 |
| First electrode plate | 202 |
| Second electrode plate | 203 |
| Separator | 204 |
| Tab | 205 |
| First direction | Z |
| Second direction | X |
| Third direction | Y |

This application is further described in the following detailed description in conjunction with the above drawings.

### DETAILED DESCRIPTION OF EMBODIMENTS

The technical solutions in some embodiments of this application are described below with reference to the drawings in some embodiments of this application. Apparently, the described embodiments are only some embodiments rather than all embodiments of this application.

It should be noted that when an element is referred to as being "connected" to another element, it may be directly connected to the another element or there may be an intervening element. When an element is referred to as being "disposed" on another element, it may be directly disposed on the another element or there may be an intervening element. When a value is considered as being "equal to" another value, it means that the two values are equal within a set deviation range, where the set deviation range is within 5%. In other words, when at least one of the two values fluctuates within the set deviation range, even if their values are not equal, they are still considered substantially equal. When a ratio of one value to another value is considered "1:1", it means that the two values are equal within a set deviation range, where the set deviation range is within 5%. In other words, when at least one of the two values fluctuates within the set deviation range, even if their values are not equal, their ratio is still considered equal.

Unless otherwise defined, all technical and scientific terms used herein have the same meaning as commonly understood by those skilled in the technical field of this application. The terms used in the specification of this application herein are for the purpose of describing specific embodiments only and are not intended to limit this application. The term "and/or" as used herein includes any and all combinations of one or more related listed items.

It should be understood that, in consideration of actual processing tolerances, the term "perpendicular" in the technical solutions of this application is used to describe an ideal state between two components. In actual production or use, an approximately perpendicular state may exist between two components. For example, with reference to numerical description, perpendicular may refer to an included angle between two lines ranging from 90° ± 10°, or a dihedral angle between two planes ranging from 90° ± 10°, or an included angle between a line and a plane ranging from 90° ± 10°. The two components described as "perpendicular" may not be absolutely straight lines or planes, they may be approximately straight lines or planes, and as long as their overall extension direction appears as a straight line or plane from a macroscopic perspective, they can be considered as a "straight line" or "plane".

Herein, the term "average particle size" refers to a particle size at which, as measured by a laser particle size analyzer, the material reaches 50% of the cumulative volume distribution from the small particle size side, also known as "D50".

An embodiment of this application provides an electrode plate. The electrode plate includes a current collector, two active material layers, and two transition layers. The current collector includes a support layer, as well as a first conductive layer and a second conductive layer disposed on two sides of the support layer in a first direction, where the first direction is a thickness direction of the current collector. One active material layer is disposed on a side of the first conductive layer facing away from the support layer, and the other active material layer is disposed on a side of the second conductive layer facing away from the support layer. One transition layer is disposed between at least a portion of the first conductive layer and the corresponding active material layer and protrudes beyond a peripheral edge of the corresponding active material layer along a second direction, and the other transition layer is disposed between at least a portion of the second conductive layer and the corresponding active material layer and protrudes beyond a peripheral edge of the corresponding active material layer along the second direction, where the second direction is perpendicular to the first direction. The active material layer includes active material particles, where an average particle size of the active material particles is 5 µm to 20 µm. The transition layer includes solid particles, where the solid particles include at least one of aluminum oxide, silicon oxide, silicon carbide, tin oxide, indium oxide, titanium dioxide, cobalt oxide, chromium trioxide, boehmite, amorphous carbon, lithium phosphorus oxynitride, and titanium diboride, and an average particle size of the solid particles is 500 nm to 1500 nm.

In the above electrode plate, one transition layer is disposed between at least a portion of the first conductive layer and the corresponding active material layer and protrudes beyond the peripheral edge of the corresponding active material layer along the second direction, and the other transition layer is disposed between at least a portion of the second conductive layer and the corresponding active material layer and protrudes beyond the peripheral edge of the corresponding active material layer along the second direction, so that a portion of the transition layer corresponding to the edge of the active material layer mitigates shear force experienced by the corresponding position of the current collector during cold pressing, thereby reducing the risk of damage to the current collector due to excessively large shear force and enhancing the structural strength of the electrode plate. The solid particles, compared to the active material particles, are less prone to swelling upon contact with an electrolyte, enabling the transition layer to buffer deformation caused by the swelling of the corresponding active material layer. By specifying the average particle size of the active material particles as 5 µm to 20 µm, the cycling performance, energy density, and lithium precipitation resistance of the electrode plate are improved. By specifying the average particle size of the solid particles as 500 nm to 1500 nm, production costs are controlled, and interface resistance is reduced. Additionally, the average particle size of the solid particles being smaller than that of the active material particles helps the solid particles to provide a buffer function between the active material particles and the current collector, reducing the risk of compressive damage to the first conductive layer or the second conductive layer due to direct contact between active material particles with a larger average particle size and the current collector, and enhancing the structural strength of the electrode plate.

The following further describes some embodiments of this application with reference to the accompanying drawings.

### Embodiment 1

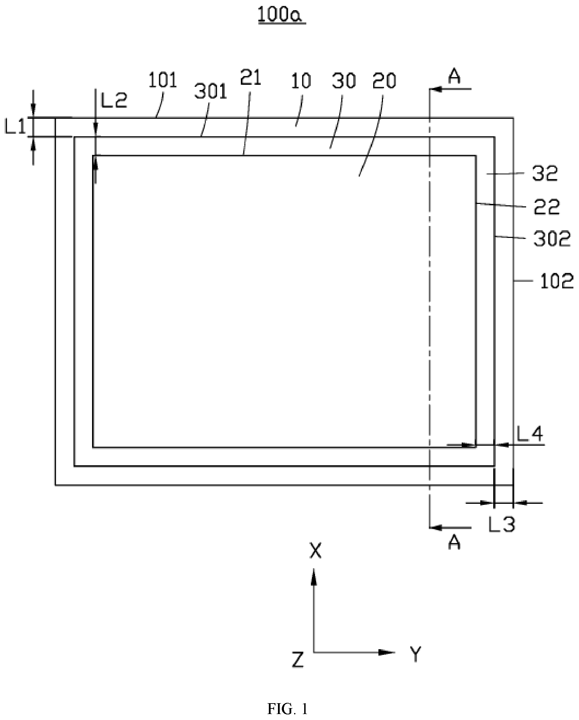

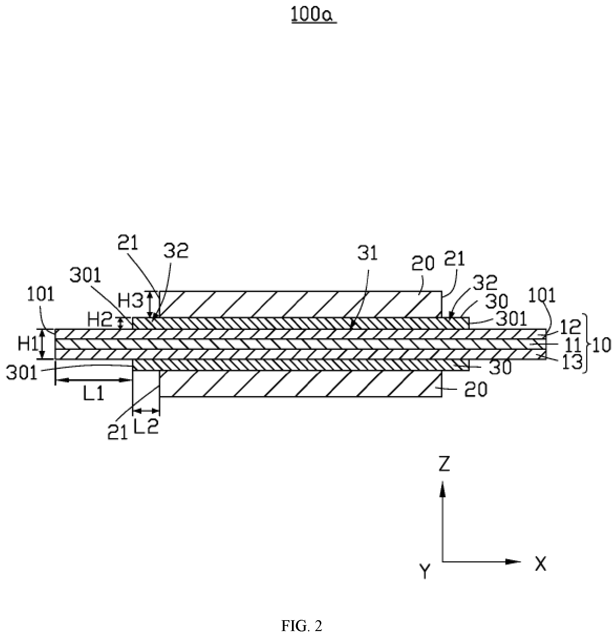

Referring to both FIG. 1 and FIG. 2, an embodiment of this application provides an electrode plate 100a, where the electrode plate 100a is configured to form a battery cell applied to a secondary battery, where the secondary battery refers to a battery that can be recharged to activate the active material for continued use after discharge. Optionally, the electrode plate 100a may be a positive electrode plate or a negative electrode plate.

The electrode plate 100a includes a current collector 10, two active material layers 20, and two transition layers 30. The current collector 10 is a composite current collector configured to collect current. Specifically, the current collector 10 includes a support layer 11, as well as a first conductive layer 12 and a second conductive layer 13 disposed on two sides of the support layer 11 in a first direction Z. The first direction Z is a thickness direction of the current collector 10.

The support layer 11 is made of a polymer insulating material providing high structural strength, low density, and low weight, which can reduce the thickness of the current collector 10 and reduce the weight of the current collector 10. The first conductive layer 12 and the second conductive layer 13 are made of metal materials. Compared to traditional metal current collectors, the first conductive layer 12 and the second conductive layer 13 disposed on two sides of the support layer 11 are thinned, which helps to reduce the generation of metal burrs when the current collector 10 is subjected to mechanical damage due to external impact, thereby reducing the risk of short circuits.

Optionally, the polymer insulating material includes one or more of polyethylene terephthalate (Polyethyleneterephthalate, PET), polypropylene (Polypropylene, PP), polyethylene (Polyethylene, PE), polyimide (Polyimide, PI), polyether ketone (Polyetherketone, PEK), and polyphenylene sulphide (Polyphenylenesulphide, PPS).

Optionally, the metal material includes one or more of aluminum, copper, nickel, silver, gold, and iron.

Referring to both FIG. 1 and FIG. 2, one active material layer 20 is disposed on a side of the first conductive layer 12 facing away from the support layer 11, and the other active material layer 20 is disposed on a side of the second conductive layer 13 facing away from the support layer 11. The two active material layers 20 are configured to generate current and collect the current to the current collector 10. Specifically, the active material layer 20 is applied onto one side of the first conductive layer 12 or the second conductive layer 13 by methods such as extrusion coating, transfer coating, or spray coating.

Optionally, when viewed along the first direction Z, the two active material layers 20 are continuously disposed in both the length direction and the width direction of the electrode plate 100a.

One transition layer 30 is disposed between at least a portion of the first conductive layer 12 and the corresponding active material layer 20 and protrudes beyond a peripheral edge of the corresponding active material layer 20 along a second direction X. The other transition layer 30 is disposed between at least a portion of the second conductive layer 13 and the corresponding active material layer 20 and protrudes beyond a peripheral edge of the corresponding active material layer 20 along the second direction X. The active material layer 20 corresponding to the first conductive layer 12 refers to the active material layer 20 located on the side of the first conductive layer 12 facing away from the support layer 11, and the active material layer 20 corresponding to the second conductive layer 13 refers to the active material layer 20 located on the side of the second conductive layer 13 facing away from the support layer 11. The current generated by the active material layer 20 is collected to the current collector 10 through the corresponding transition layer 30. A portion of the transition layer 30 corresponding to the edge of the active material layer 20 is configured to mitigate shear force experienced by the corresponding position of the current collector 10 during cold pressing, thereby reducing the risk of damage to the current collector 10 due to excessively large shear force and enhancing the structural strength and electrical conductivity of the electrode plate 100a. The first direction Z is perpendicular to the second direction X. Optionally, the second direction X is a width direction of the current collector 10.

The active material layer 20 includes active material particles, where an average particle size of the active material particles is 5 µm to 20 µm. When the average particle size of the active material particles is too small (less than 5 µm), it is likely to cause difficulty in slurry dispersion, affecting the cycling performance of the electrode plate 100a. When the average particle size of the active material particles is too large (greater than 20 µm), it is likely to increase the solid-phase diffusion resistance of active ions, increase polarization, and affect the energy density and lithium precipitation resistance of the electrode plate 100a. By specifying the average particle size of the active material particles as 5 µm to 20 µm, the cycling performance, energy density, and lithium precipitation resistance of the electrode plate 100a are improved.

Optionally, the average particle size of the active material particles may be one of 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any other value within the range of 5 µm to 20 µm.

Further, the average particle size of the active material particles is 10 µm to 15 µm, to further improve the cycling performance, energy density, and lithium precipitation resistance of the electrode plate 100a.

The transition layer 30 includes solid particles. Specifically, the transition layer 30 is a layered structure formed by a slurry of solid particles on the first conductive layer 12 and the second conductive layer 13. This layered structure has lithium-ion conductivity. The solid particles form a solid electrolyte containing no positive active material particles and no negative active material particles. Exemplarily, the solid electrolyte is an oxide solid electrolyte, a sulfide solid electrolyte, or the like. It can be understood that, in addition to the solid electrolyte, the material constituting the transition layer 30 may also include, but is not limited to, conductive additives, sintering aids, and binders, to enhance the structural strength of the transition layer 30. The solid particles, compared to the active material particles, are less prone to swelling upon contact with an electrolyte, enabling the transition layer 30 to buffer deformation caused by the swelling of the corresponding active material layer 20, reducing the risk of detachment between the active material layer 20 and the current collector 10.

Optionally, the solid particles include at least one of aluminum oxide, silicon oxide, silicon carbide, tin oxide, indium oxide, titanium dioxide, cobalt oxide, chromium trioxide, boehmite, amorphous carbon, lithium phosphorus oxynitride, and titanium diboride.

The average particle size of the solid particles is 500 nm to 1500 nm. When the average particle size of the solid particles is too small (less than 500 nm), production costs are increased. When the average particle size of the solid particles is too large (greater than 1500 nm), it is likely to affect the conductive contact between the active material layer 20 and the current collector 10, leading to higher interface resistance. By specifying the average particle size of the solid particles as 500 nm to 1500 nm, production costs are controlled, and interface resistance is reduced. Additionally, the average particle size of the solid particles being smaller than that of the active material particles helps the solid particles to provide a buffer function between the active material particles and the current collector 10, reducing the risk of compressive damage to the first conductive layer 12 or the second conductive layer 13 due to direct contact between active material particles with a larger average particle size and the current collector 10, and enhancing the structural strength of the electrode plate 100.

Optionally, the average particle size of the solid particles may be one of 500 nm, 600 nm, 700 nm, 800 nm, 900 nm, 1000 nm, 1100 nm, 1200 nm, 1300 nm, 1400 nm, 1500 nm, or any other value within the range of 500 nm to 1500 nm.

Further, the average particle size of the solid particles is 800 nm to 1000 nm, to further control production costs, reduce interface resistance, and further help the solid particles to provide a buffer function between the active material particles and the current collector 10, reducing the risk of compressive damage to the first conductive layer 12 or the second conductive layer 13 due to direct contact between active material particles with a larger average particle size and the current collector 10, and enhancing the structural strength of the electrode plate 100a.

In the above electrode plate 100a, one transition layer 30 is disposed between at least a portion of the first conductive layer 12 and the corresponding active material layer 20 and protrudes beyond the peripheral edge of the corresponding active material layer 20 along the second direction X, and the other transition layer 30 is disposed between at least a portion of the second conductive layer 13 and the corresponding active material layer 20 and protrudes beyond the peripheral edge of the corresponding active material layer 20 along the second direction X, so that a portion of the transition layer 30 corresponding to the edge of the active material layer 20 mitigates shear force experienced by the corresponding position of the current collector 10 during cold pressing, thereby reducing the risk of damage to the current collector 10 due to excessively large shear force and enhancing the structural strength and electrical conductivity of the electrode plate 100a. The solid particles, compared to the active material particles, are less prone to swelling upon contact with an electrolyte, enabling the transition layer 30 to buffer deformation caused by the swelling of the corresponding active material layer 20. By specifying the average particle size of the active material particles as 5 µm to 20 µm, the cycling performance, energy density, and lithium precipitation resistance of the electrode plate 100a are improved. By specifying the average particle size of the solid particles as 500 nm to 1500 nm, production costs are controlled, and interface resistance is reduced. Additionally, the average particle size of the solid particles being smaller than that of the active material particles helps the solid particles to provide a buffer function between the active material particles and the current collector 10, reducing the risk of compressive damage to the first conductive layer 12 or the second conductive layer 13 due to direct contact between active material particles with a larger average particle size and the current collector 10, and enhancing the structural strength of the electrode plate 100a.

Referring to both FIG. 1 and FIG. 2, in some embodiments, a compacted density of the active material layer 20 is 3 g/cm³ to 4.5 g/cm³, and a compacted density of the transition layer 30 is 1.6 g/cm³ to 3 g/cm³. It should be noted that the active material layer 20 and the corresponding transition layer 30 are cold-pressed simultaneously, and the material difference between the active material layer 20 and the transition layer 30 results in different compacted densities for the active material layer 20 and the transition layer 30. The compacted density of the active material layer 20 and the compacted density of the transition layer 30 are substantially positively correlated. During cold pressing, the compacted density of the active material layer 20 is primarily considered. When the compacted density of the active material layer 20 is too low (less than 3 g/cm³), it is likely to result in an excessively low energy density of the electrode plate 100a. When the compacted density of the active material layer 20 is too high (greater than 4.5 g/cm³), it is likely to cause the current collector 10 to experience excessively large shear force and thus causes the risk of damage, affecting the structural strength of the electrode plate 100a, and the excessively high compacted density is also likely to reduce ion transport channels, affecting the cycling performance of the electrode plate 100a.

By specifying the compacted density of the active material layer 20 as 3 g/cm³ to 4.5 g/cm³, the energy density and cycling performance of the electrode plate 100a are improved, and the risk of damage to the current collector 10 due to excessively large shear force is reduced.

Further, the compacted density of the active material layer 20 is 4.1 g/cm³ to 4.3 g/cm³, and the compacted density of the transition layer 30 is 2.2 g/cm³ to 2.4 g/cm³, to further improve the energy density and cycling performance of the electrode plate 100a and reduce the risk of damage to the current collector 10 due to excessively large shear force.

Optionally, the compacted density of the active material layer 20 may be one of 3 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, 4 g/cm³, 4.1 g/cm³, 4.2 g/cm³, 4.3 g/cm³, 4.4 g/cm³, 4.5 g/cm³, or any other value within the range of 3 g/cm³ to 4.5 g/cm³.

Optionally, the compacted density of the transition layer 30 may be one of 2.2 g/cm³, 2.3 g/cm³, 2.4 g/cm³, or any other value within the range of 2.2 g/cm³ to 2.4 g/cm³.

In some embodiments, a resistance R of the transition layer 30 satisfies: 1 mohm ≤ R ≤ 20 mohm, to improve the electrical conductivity of the transition layer 30.

Optionally, R may be one of 1 mohm, 2 mohm, 3 mohm, 4 mohm, 5 mohm, 6 mohm, 7 mohm, 8 mohm, 9 mohm, 10 mohm, 01 mohm, 12 mohm, 13 mohm, 14 mohm, 15 mohm, 16 mohm, 17 mohm, 18 mohm, 19 mohm, 20 mohm, or any other value within the range of 1 mohm ≤ R ≤ 20 mohm.

Referring to both FIG. 1 and FIG. 2, in some embodiments, the transition layer 30 includes a connecting portion 31 and an extending portion 32 connected to each other. Along the first direction Z, a projection of the connecting portion 31 overlaps with a projection of the corresponding active material layer 20, which helps to reduce the risk of compressive damage to the first conductive layer 12 or the second conductive layer 13 due to direct contact between the active material particles and the current collector 10, and enhances the structural strength of the electrode plate 100a. A projection of the extending portion 32 surrounds a peripheral side of the projection of the corresponding active material layer 20, and the projection of the extending portion 32 is further located within a projection of the current collector 10, so that the portion of the transition layer 30 corresponding to the edge of the active material layer 20 mitigates shear force experienced by the corresponding position of the current collector 10 during cold pressing, thereby reducing the risk of damage to the current collector 10 due to excessively large shear force and enhancing the structural strength and electrical conductivity of the electrode plate 100a.

Referring to both FIG. 1 and FIG. 2, in some embodiments, the current collector 10 includes two first end surfaces 101 disposed opposite each other along the second direction X, the active material layer 20 includes two second end surfaces 21 disposed opposite each other along the second direction X, and the transition layer 30 includes two third end surfaces 301 disposed opposite each other along the second direction X. Along the second direction X, among the first end surface 101, the second end surface 21, and the third end surface 301 located on one side of the active material layer 20, the current collector 10 between the first end surface 101 and the third end surface 301 forms an uncoated foil region for connection of an electrode terminal, and the transition layer 30 between the second end surface 21 and the third end surface 301 is a portion of the extending portion 32. The electrode terminal may be, but is not limited to, a tab.

A distance L1 between the first end surface 101 and the third end surface 301 satisfies: 0.2 mm ≤ L1 ≤ 1.8 mm, to define an area of the uncoated foil region. When L1 is too small (less than 0.2 mm), it is likely to result in a small connection area between the uncoated foil region and the electrode terminal, leading to the risk of weak connection strength. When L1 is too large (greater than 1.8 mm), it leads to excessive space occupation by the uncoated foil region in the second direction X, causing space waste and thus affecting the energy density of the electrode plate 100a. By specifying 0.2 mm ≤ L1 ≤ 1.8 mm, the connection strength between the uncoated foil region and the electrode terminal is enhanced, and space waste caused by the uncoated foil region in the second direction X is reduced, facilitating an increase in the energy density of the electrode plate 100a. It can be understood that the uncoated foil region and the electrode terminal may be connected by, but not limited to, welding, to form a weld mark.

A distance L2 between the second end surface 21 and the third end surface 301 satisfies: 0 < L2 ≤ 1.5 mm, which helps to visually check whether the transition layer 30 protrudes beyond the peripheral edge of the corresponding active material layer 20 along the second direction X and to reduce space waste caused by excessive space occupation by the extending portion 32 in the second direction X.

Optionally, L1 may be one of 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, or any other value within the range of 0.2 mm ≤ L1 ≤ 1.8 mm.

Optionally, L2 may be one of 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, or any other value within the range of 0 < L2 ≤ 1.5 mm.

Further, 0.4 mm ≤ L1 ≤ 0.6 mm, which is to further enhance the connection strength between the uncoated foil region and the electrode terminal and reduce space waste caused by the uncoated foil region in the second direction X, facilitating an increase in the energy density of the electrode plate 100a.

Further, 0.2 mm ≤ L2 ≤ 0.5 mm, which further helps to visually check whether the transition layer 30 protrudes beyond the peripheral edge of the corresponding active material layer 20 along the second direction X and to reduce space waste caused by excessive space occupation by the extending portion 32 in the second direction X.

Referring to both FIG. 1 and FIG. 2, in some embodiments, the current collector 10 includes two fourth end surfaces 102 disposed opposite each other along a third direction Y, the active material layer 20 includes two fifth end surfaces 22 disposed opposite each other along the third direction Y, and the transition layer 30 includes two sixth end surfaces 302 disposed opposite each other along the third direction Y. The first direction Z, the second direction X, and the third direction Y are perpendicular to each other. Optionally, the third direction Y is a length direction of the current collector 10.

Along the third direction Y, among the fourth end surface 102, the fifth end surface 22, and the sixth end surface 302 located on another side of the active material layer 20, the current collector 10 between the fourth end surface 102 and the sixth end surface 302 forms an uncoated foil region for connection of an electrode terminal, and the transition layer 30 between the fifth end surface 22 and the sixth end surface 302 is a portion of the extending portion 32. The electrode terminal may be, but is not limited to, a tab.

A distance L3 between the fourth end surface 102 and the sixth end surface 302 satisfies: 0.2 mm ≤ L3 ≤ 1.8 mm, to define an area of the uncoated foil region. When L3 is too small (less than 0.2 mm), it is likely to result in a small connection area between the uncoated foil region and the electrode terminal, leading to the risk of weak connection strength. When L3 is too large (greater than 1.8 mm), it leads to excessive space occupation by the uncoated foil region in the third direction Y, causing space waste and thus affecting the energy density of the electrode plate 100a. By specifying 0.2 mm ≤ L3 ≤ 1.8 mm, the connection strength between the uncoated foil region and the electrode terminal is enhanced, and space waste caused by the uncoated foil region in the third direction Y is reduced, facilitating an increase in the energy density of the electrode plate 100a.

A distance L4 between the fifth end surface 22 and the sixth end surface 302 satisfies: 0 < L4 ≤ 1.5 mm, helping to visually check whether the transition layer 30 protrudes beyond the peripheral edge of the corresponding active material layer 20 along the third direction Y and to reduce space waste caused by excessive space occupation by the extending portion 32 in the third direction Y.

Optionally, L3 may be one of 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, or any other value within the range of 0.2 mm ≤ L3 ≤ 1.8 mm.

Optionally, L4 may be one of 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, or any other value within the range of 0 < L4 ≤ 1.5 mm.

Further, 0.4 mm ≤ L3 ≤ 0.6 mm, which is to further enhance the connection strength between the uncoated foil region and the electrode terminal and reduce space waste caused by the uncoated foil region, facilitating an increase in the energy density of the electrode plate 100a.

Further, 0.2 mm ≤ L4 ≤ 0.5 mm, which helps to visually check whether the transition layer 30 protrudes beyond the peripheral edge of the corresponding active material layer 20 along the third direction Y and to reduce space waste caused by excessive space occupation by the extending portion 32 in the second direction X.

It can be understood that the first end surface 101, the second end surface 21, the third end surface 301, the fourth end surface 102, the fifth end surface 22, and the sixth end surface 302 may each be one of a planar structure, an arcuate structure, or an irregular structure, where the shortest distance between two end surfaces is used as a distance defining the above ranges.

It can be understood that, in other embodiments, the edge portion of the active material layer 20 further includes a thinned region, and the second end surface 21 or the fifth end surface 22 is located at an end portion of the corresponding thinned region.

Referring to both FIG. 1 and FIG. 2, in some embodiments, along the first direction Z, widths of the two transition layers 30 located on two sides of the current collector 10 are equal in the second direction X. Projections of the two transition layers 30 are misaligned in the second direction X, and each transition layer 30 includes a misalignment region that does not overlap with the other transition layer 30. The two misalignment regions are spaced apart in the second direction X, and widths of the two misalignment regions in the second direction X are equal and are both less than or equal to 0.3 mm to meet processing tolerance requirements.

Optionally, the width of each misalignment region in the second direction X may be one of 0, 0.1 mm, 0.2 mm, 0.3 mm, or any other value within the range of less than 0.3 mm.

Referring to both FIG. 1 and FIG. 2, in some embodiments, along the first direction Z, a thickness H1 of the current collector 10 satisfies: 4 µm ≤ H1 ≤ 20 µm, to meet the structural strength requirements of the current collector 10 and reduce space waste caused by the current collector 10, facilitating an increase in the energy density of the electrode plate 100a.

Optionally, H1 may be one of 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any other value within the range of 4 µm to 20 µm.

Further, 7 m ≤ H1 ≤ 9 m, which is to further meet the structural strength requirements of the current collector 10 and reduce space waste caused by the current collector 10, facilitating an increase in the energy density of the electrode plate 100a.

In some embodiments, along the first direction Z, a thickness H2 of the transition layer 30 satisfies: 0.5 µm ≤ H2 ≤ 3 µm. When H2 is too small (less than 0.5 µm), it is likely to affect the buffering performance and bonding strength of the transition layer 30. When H2 is too large (greater than 3 µm), it is likely to cause excessive space occupation by the transition layer 30, leading to space waste and thus affecting the energy density of the electrode plate 100a. By specifying 0.5 µm ≤ H2 ≤ 3 µm, the buffering performance and bonding strength of the transition layer 30 are improved, and space waste caused by the transition layer 30 is reduced, facilitating an increase in the energy density of the electrode plate 100a.

Optionally, H2 may be one of 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, 3 µm, or any other value within the range of 0.5 µm ≤ H2 ≤ 3 µm.

Further, 1 µm ≤ H2 ≤ 1.5 µm, which is to further improve the buffering performance and bonding strength of the transition layer 30 and reduce space waste caused by the transition layer 30, facilitating an increase in the energy density of the electrode plate 100a.

In some embodiments, along the first direction Z, a thickness H3 of the active material layer 20 satisfies: 60 µm ≤ H3 ≤ 160 µm. When H3 is too small (less than 60 µm), it is likely to result in an excessively low energy density of the electrode plate 100a. When H3 is too large (greater than 160 µm), it is likely to increase the internal resistance of the electrode plate 100a and cause excessive space occupation by the active material layer 20, leading to space waste. By specifying 60 µm ≤ H3 ≤ 160 µm, the internal resistance of the electrode plate 100a is controlled, and space waste caused by the active material layer 20 is reduced, facilitating an increase in the energy density of the electrode plate 100a.

Optionally, H3 may be one of 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, 150 µm, 155 µm, 160 µm, or any other value within the range of 60 µm to 160 µm.

Further, 90 µm ≤ H3 ≤ 110 µm, which is to further control the internal resistance of the electrode plate 100a and reduce the active material layer 20 or reduce space waste caused by the active material layer 20, facilitating an increase in the energy density of the electrode plate 100a.

In some embodiments, a coating weight of the active material layer 20 is 100 mg/1540.25 mm² to 400 mg/1540.25 mm². When the coating weight is too low (less than 100 mg/1540.25 mm²), it is likely to result in an excessively low energy density of the electrode plate 100a. When the coating weight is too high (greater than 400 mg/1540.25 mm²), it is likely to lead to material waste, and in severe cases, it may cause excessive capacity, leading to precipitation of dendrites which pierce a separator, causing a short circuit and thus affecting the safety of a battery cell containing the electrode plate 100a. By specifying the coating weight of the active material layer 20 as 100 mg/1540.25 mm² to 400 mg/1540.25 mm², the energy density of the electrode plate 100a is increased, material waste is reduced, and the safety of the battery cell containing the electrode plate 100a is improved.

Optionally, the coating weight of the active material layer 20 may be one of 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, or any other value within the range of 100 to 400, where the coating weight is correspondingly measured in mg/1540.25 mm².

### Embodiment 2

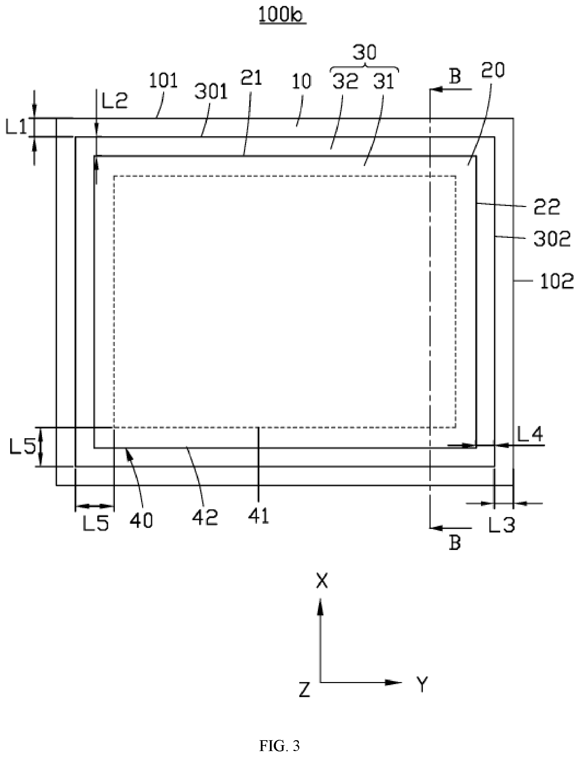

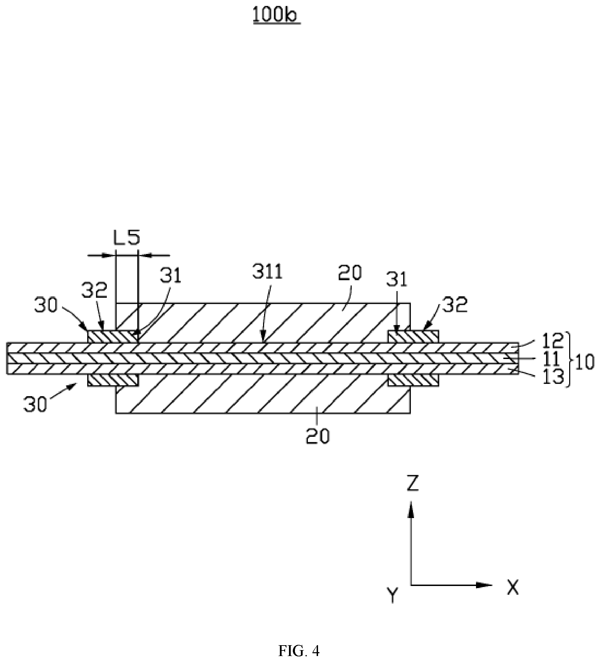

Referring to both FIG. 3 and FIG. 4, an embodiment of this application further provides an electrode plate 100b. The electrode plate 100b differs from the electrode plate 100a in that: the connecting portion 31 is provided with a through hole 311 extending through the connecting portion 31 along the first direction Z, the active material layer 20 passes through the through hole 311 and is connected to the corresponding first conductive layer 12 or second conductive layer 13, and the edge of the active material layer 20 applies greater shear force to the current collector 10 during cold pressing compared to other portions of the current collector 10. By providing the through hole 311, the transition layer 30 adapts to a portion of the current collector 10 subjected to greater shear force, to reduce the risk of compressive damage to the first conductive layer 12 or the second conductive layer 13 due to direct contact between the active material particles at the edge of the active material layer 20 and the current collector 10, and mitigate shear force experienced by the corresponding position of the current collector 10 during cold pressing, thereby reducing the risk of damage to the current collector 10 due to excessively large shear force and enhancing the structural strength and electrical conductivity of the electrode plate 100b. Additionally, a portion of the active material layer 20 passing through the through hole 311 has a larger thickness, which facilitates an increase in the energy density of the electrode plate 100b.

In some embodiments, along the first direction Z, a projection of the through hole 311 is located within a projection range of the corresponding active material layer 20, a projection overlap region 40 of the connecting portion 31 and the corresponding active material layer 20 includes an inner periphery 41 and an outer periphery 42, the inner periphery 41 is a projection of an edge of a hole wall of the through hole 311, the outer periphery 42 is a projection of an end surface of the corresponding active material layer 20, the outer periphery 42 surrounds a peripheral side of the inner periphery 41, and a distance L5 between the inner periphery 41 and the outer periphery 42 satisfies: 0 < L5 ≤ 1 mm. Since the edge of the active material layer 20 experiences large stress, providing the transition layer at the edge position facilitates buffering between the edge of the active material layer 20 and the current collector 10, and helps to increase a volume of the portion of the active material layer 20 passing through the through hole 311, thereby increasing a volume of a thicker portion of the active material layer 20 and increasing the energy density of the electrode plate 100b.

Optionally, L5 may be one of 0.1 mm, 0.2 mm, 0.3 mm, 0.4 mm, 0.5 mm, 0.6 mm, 0.7 mm, 0.8 mm, 0.9 mm, 1 mm, or any other value within the range of 0 < L5 ≤ 1 mm.

Further, 0 < L5 ≤ 0.5 mm, which further helps to increase the volume of the portion of the active material layer 20 passing through the through hole 311, thereby increasing the volume of the thicker portion of the active material layer 20 and increasing the energy density of the electrode plate 100b.

In some embodiments, along the first direction Z, a projection shape of the through hole 311 is rectangular to facilitate the formation of the through hole 311 by the transition layer 30 during coating.

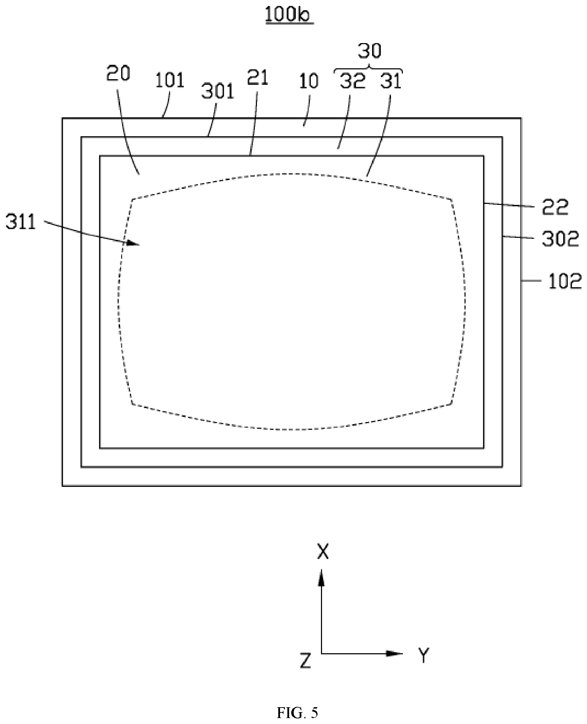

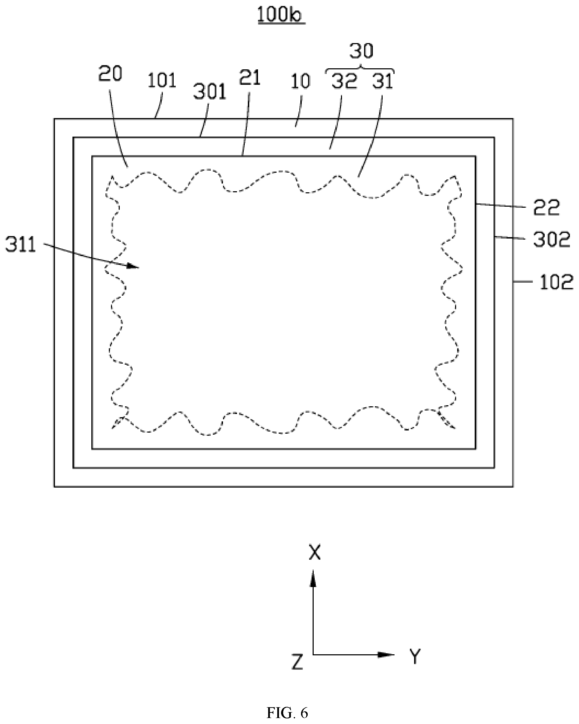

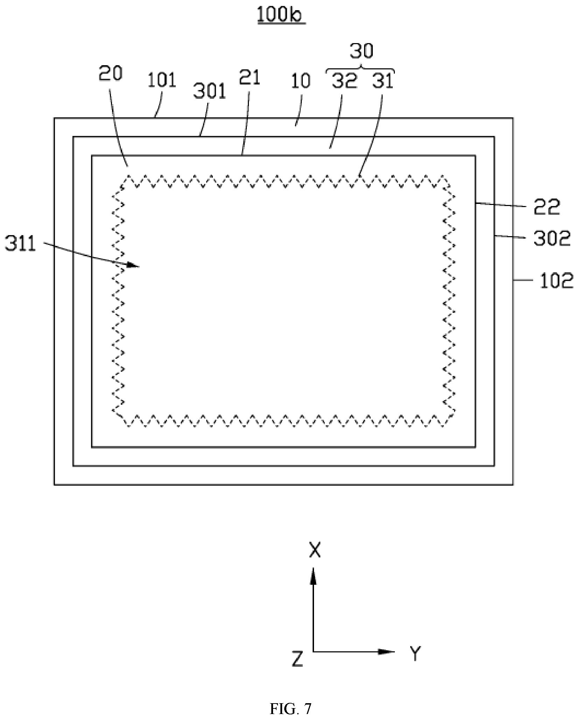

Referring to FIG. 5, FIG. 6, and FIG. 7, it can be understood that, in other embodiments, the projection of the hole wall of the through hole 311 is arc-shaped, wavy, or zigzag to increase an connection area between the hole wall of the through hole 311 and the corresponding active material layer 20, thereby enhancing the connection strength between the transition layer 30 and the corresponding active material layer 20.

It should be noted that, except for the above differences, the parameters of the electrode plate 100b are substantially the same as those of the electrode plate 100a, and reference may be made to the description of the electrode plate 100a.

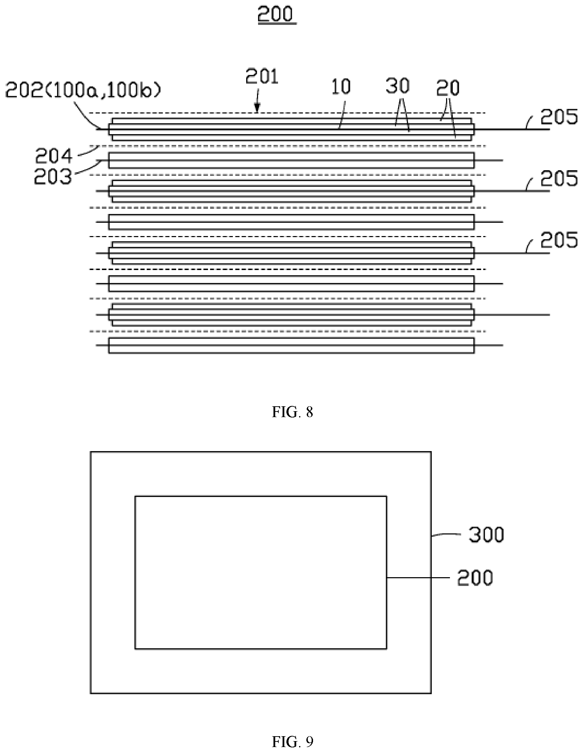

Referring to FIG. 8, an embodiment of this application further provides a battery cell 200, including an electrode assembly 201, where the electrode assembly 201 includes the electrode plate 100a (100b) described in any of the above embodiments.

In some embodiments, the electrode assembly 201 includes a first electrode plate 202, a separator 204, and a second electrode plate 203 sequentially stacked along the first direction Z. The first electrode plate 202 has positive polarity, and the second electrode plate 203 has negative polarity. At least one of the first electrode plate 202 and the second electrode plate 203 is the electrode plate 100a (100b).

In some embodiments, the first electrode plate 202 is the electrode plate 100a (100b), and the battery cell 200 further includes multiple tabs 205, where one end of each tab 205 is connected to an uncoated foil region of the first electrode plate 202, and another end of each tab 205 extends outward.

It can be understood that, in other embodiments, the electrode assembly 201 includes a first electrode plate 202, a separator 204, and a second electrode plate 203 sequentially wound. The first electrode plate 202 has positive polarity, and the second electrode plate 203 has negative polarity. At least one of the first electrode plate 202 and the second electrode plate 203 is the electrode plate 100a (100b).

Referring to FIG. 9, an embodiment of this application further provides an electric device 300, including the electrode plate 100a (100b) described in any of the above embodiments or the battery cell 200 described in any of the above embodiments. The electric device 300 may be a vehicle, a mobile phone, a portable device, a laptop, a ship, a spacecraft, an electric toy, an electric tool, or the like.

In summary, in the above electrode plate 100a (100b), battery cell 200, and electric device 300, one transition layer 30 is disposed between at least a portion of the first conductive layer 12 and the corresponding active material layer 20 and protrudes beyond the peripheral edge of the corresponding active material layer 20 along the second direction X, and the other transition layer 30 is disposed between at least a portion of the second conductive layer 13 and the corresponding active material layer 20 and protrudes beyond the peripheral edge of the corresponding active material layer 20 along the second direction X, so that a portion of the transition layer 30 corresponding to the edge of the active material layer 20 mitigates shear force experienced by the corresponding position of the current collector 10 during cold pressing, thereby reducing the risk of damage to the current collector 10 due to excessively large shear force and enhancing the structural strength and electrical conductivity of the electrode plate 100a (100b). By specifying the average particle size of the active material particles as 5 µm to 20 µm, the cycling performance, energy density, and lithium precipitation resistance of the electrode plate 100a (100b) are improved. The solid particles, compared to the active material particles, are less prone to swelling upon contact with an electrolyte, enabling the transition layer 30 to buffer deformation caused by the swelling of the corresponding active material layer 20. By specifying the average particle size of the solid particles as 500 nm to 1500 nm, production costs are controlled, and interface resistance is reduced. Additionally, the average particle size of the solid particles being smaller than that of the active material particles helps the solid particles to provide a buffer function between the active material particles and the current collector 10, reducing the risk of compressive damage to the first conductive layer 12 or the second conductive layer 13 due to direct contact between active material particles with a larger average particle size and the current collector 10, and enhancing the structural strength of the electrode plate 100a (100b).

The following provides a detailed description of this application based on examples in Tables 1 to 3, but this application is not limited to these examples.

The tensile strength of the tab is used as a parameter for comparison. It should be noted that one end of the tab is connected to the uncoated foil region of the electrode plate 100a (100b), and another end extends outward. The edge portion of the electrode plate 100a (100b) (the portion of the current collector 10 corresponding to the edge of the active material layer 20) has weaker tensile strength compared to other portions of the electrode plate 100a (100b), and during stretching of the tab, the edge portion of the electrode plate 100a (100b) is prone to fracture and separation first. Therefore, the tensile strength of the tab can reflect the structural strength of the electrode plate 100a (100b). A higher tensile strength of the tab indicates a higher structural strength of the electrode plate 100a (100b), and a lower tensile strength of the tab indicates a lower structural strength of the electrode plate 100a (100b).

The tensile strength of the tab in each example and comparative example is measured by the following method: The electrode plate 100a (100b) is cut into a sample with dimensions of 20 mm * 10 cm, with two ends of the sample being an electrode plate and a tab, respectively. The two ends of the sample are fixed by a tensile machine and stretched at a constant rate of 50 mm/min. A maximum tensile stress at the fracture of the edge portion of the electrode plate 100a (100b) is recorded, and a ratio of the maximum tensile stress to a cross-sectional area at the fracture is the tensile strength of the tab.

The energy density of the battery in each example and comparative example is measured as follows: At 25°C, the battery is charged at a constant current of 0.5C to 3.9 V and then charged at a constant voltage until the current reaches 0.05C, and the thickness, width, and length of the battery made from the electrode plate 100a (100b) are measured. At 25°C, the battery is charged at a constant current of 0.5C to 4.45 V, then charged at a constant voltage until the current reaches 0.025C, left standing for 5 min, and discharged at a constant current of 0.1C to 3.0 V, and a discharge energy of the battery is recorded. 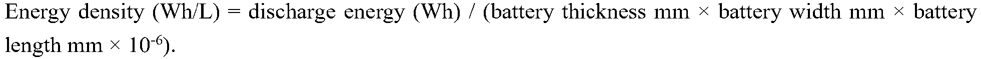 Energy density (Wh/L) = discharge energy (Wh) / (battery thickness mm × battery width mm × battery length mm × 10-6).

The test standards are: the test is passed if the tensile strength of the tab is greater than or equal to 26 N/mm², and the test result is considered excellent if the tensile strength is greater than or equal to 28 N/mm². The test is passed if the energy density is greater than or equal to 700 Wh/L, and the test result is considered excellent if the energy density is greater than or equal to 720 Wh/L.

### Example 1

Referring to FIG. 2, the transition layer 30 included a connecting portion 31 and an extending portion 32 connected to each other. Along the first direction Z, a projection of the connecting portion 31 overlapped with a projection of the corresponding active material layer 20, a projection of the extending portion 32 surrounded a peripheral side of the projection of the corresponding active material layer 20, and the projection of the extending portion 32 was further located within a projection of the current collector 10. L1 = 1.8 mm; L2 = 0.2 mm; L3 = 0.2 mm; L4 = 0.2 mm; H1 = 8 µm; H2 = 2 µm; H3 = 60 µm; the compacted density of the active material layer 20 was 3 g/cm³; the compacted density of the transition layer 30 was 1.6 g/cm³; the average particle size of the active material particles was 5 µm; the average particle size of the solid particles was 500 nm; and the solid particles included aluminum oxide, tin oxide, silicon oxide, boehmite, and calcium carbonate.

### Example 2

Example 2 was the same as Example 1 except that the average particle size of the active material particles was 10 µm.

### Example 3

Example 3 was the same as Example 1 except that the average particle size of the active material particles was 15 µm.

### Example 4

Example 4 was the same as Example 1 except that the average particle size of the active material particles was 20 µm.

### Comparative Example 1

Comparative Example 1 was the same as Example 1 except that the average particle size of the active material particles was 2 µm.

### Comparative Example 2

Comparative Example 2 was the same as Example 1 except that the average particle size of the active material particles was 30 µm.

### Example 5

Example 5 was the same as Example 1 except that the average particle size of the solid particles was 800 nm.

### Example 6

Example 6 was the same as Example 1 except that the average particle size of the solid particles was 1000 nm.

### Example 7

Example 7 was the same as Example 1 except that the average particle size of the solid particles was 1500 nm.

### Comparative Example 3

Comparative Example 3 was the same as Example 1 except that the average particle size of the active material particles was 200 nm.

### Comparative Example 4

Comparative Example 4 was the same as Example 1 except that the average particle size of the active material particles was 2000 nm.

### Example 8

Referring to FIG. 4, Example 8 was the same as Example 1 except that the connecting portion 31 was provided with a through hole 311 extending through the connecting portion 31 along the first direction Z, the active material layer 20 passed through the through hole 311 and was connected to the corresponding first conductive layer 12 or second conductive layer 13, and L5 was 0.2 mm.

### Example 9

Example 9 was the same as Example 8 except that L5 was 0.5 mm.

### Example 9

Example 9 was the same as Example 8 except that L5 was 1 mm.

### Example 10

Example 10 was the same as Example 8 except that L5 was 1.5 mm.

Comparative Example 5 was the same as Example 1 except that the transition layer 30 was active material particles.

**Table 1**

| | Average particle size of active material particles (µm) | Average particle size of solid particles (nm) | L5 (mm) | Tensile strength of tab (N/mm²) | Energy density of battery (Wh/L) |
|---|---|---|---|---|---|
| Example 1 | 5 | 500 | None | 27 | 709 |
| Example 2 | 10 | 500 | None | 28 | 704 |
| Example 3 | 15 | 500 | None | 28 | 700 |
| Example 4 | 20 | 500 | None | 26 | 700 |
| Comparative Example 1 | 2 | 500 | None | 23 | 712 |
| Comparative Example 2 | 30 | 500 | None | 22 | 686 |
| Example 5 | 5 | 800 | None | 28 | 709 |
| Example 6 | 5 | 1000 | None | 28 | 709 |
| Example 7 | 5 | 1500 | None | 26 | 709 |
| Comparative Example 3 | 5 | 200 | None | 25 | 709 |
| Comparative Example 4 | 5 | 2000 | None | 24 | 709 |
| Example 8 | 5 | 500 | 0.2 | 27 | 819 |
| Example 9 | 5 | 500 | 0.5 | 27 | 818 |
| Example 10 | 5 | 500 | 1 | 27 | 805 |
| Example 11 | 5 | 500 | 1.5 | 28 | 790 |
| Comparative Example 5 | 5 | None | None | 18 | 819 |

As shown in Table 1:
From Examples 1 to 4 and Comparative Examples 1 and 2, it can be seen that: by specifying the average particle size of the active material particles as 5 µm to 20 µm, the energy density of the battery (700 Wh/L or higher) and the structural strength of the electrode plate (26 N/mm² or higher) meet the standards.

From Example 1, Examples 5 to 7, and Comparative Examples 3 to 4, it can be seen that: by specifying the average particle size of the solid particles as 500 nm to 1500 nm, the energy density of the battery and the structural strength of the electrode plate meet the standards.

From Example 1 and Examples 8 to 11, it can be seen that: by providing the through hole 311 and specifying 0 < L5 ≤ 1 mm, the energy density of the battery and the structural strength of the electrode plate meet the standards. From Example 1 and Comparative Example 5, it can be seen that: by providing the transition layer 30, the energy density of the battery and the structural strength of the electrode plate meet the standards.

In Examples 12 to 16, except for the parameters involved in Table 2, all other parameters are the same as those in Example 1.

**Table 2**

| | Compacted density of active material layer (g/cm³) | Compacted density of transition layer (g/cm³) | Tensile strength of tab (N/mm²) | Energy density of battery (Wh/L) |
|---|---|---|---|---|
| Example 1 | 3 | 1.6 | 27 | 709 |
| Example 12 | 4.1 | 2.2 | 26 | 722 |
| Example 13 | 4.3 | 2.4 | 26 | 721 |
| Example 14 | 4.5 | 3 | 26 | 712 |
| Example 15 | 2 | 1.1 | 28 | 500 |
| Example 16 | 5 | 3.5 | 15 | 730 |

As shown in Table 2, from Example 1 and Examples 12 to 16, it can be seen that: by specifying the compacted density of the active material layer 20 as 3 g/cm³ to 4.5 g/cm³ and the compacted density of the transition layer 30 as 1.6 g/cm³ to 3 g/cm³, the energy density of the battery and the structural strength of the electrode plate meet the standards.

In Examples 17 to 40, except for the parameters involved in Table 3, all other parameters are the same as those in Example 1.

**Table 3**

| | L1 (mm) | L2 (mm) | H1 (µm) | H2 (µm) | H3 (µm) | Tensile strength of tab (N/mm²) | Energy density of battery (Wh/L) |
|---|---|---|---|---|---|---|---|
| Example 1 | 1.8 | 0.2 | 8 | 2 | 60 | 27 | 709 |
| Example 17 | 0.2 | 0.2 | 8 | 2 | 60 | 26 | 721 |
| Example 18 | 0.4 | 0.2 | 8 | 2 | 60 | 27 | 714 |
| Example 19 | 0.6 | 0.2 | 8 | 2 | 60 | 27 | 711 |
| Example 20 | 0.1 | 0.2 | 8 | 2 | 60 | 24 | 717 |
| Example 21 | 3 | 0.2 | 8 | 2 | 60 | 26 | 690 |
| Example 22 | 1.8 | 0.5 | 8 | 2 | 60 | 27 | 707 |
| Example 23 | 1.8 | 1.5 | 8 | 2 | 60 | 27 | 701 |
| Example 24 | 1.8 | 0.1 | 8 | 2 | 60 | 26 | 710 |
| Example 25 | 1.8 | 2 | 8 | 2 | 60 | 26 | 690 |
| Example 26 | 1.8 | 0.2 | 4 | 2 | 60 | 26 | 723 |
| Example 27 | 1.8 | 0.2 | 10 | 2 | 60 | 27 | 705 |
| Example 28 | 1.8 | 0.2 | 16 | 2 | 60 | 40 | 700 |
| Example 29 | 1.8 | 0.2 | 2 | 2 | 60 | 15 | 733 |
| Example 30 | 1.8 | 0.2 | 20 | 2 | 60 | 50 | 661 |
| Example 31 | 1.8 | 0.2 | 8 | 0.5 | 60 | 27 | 715 |
| Example 32 | 1.8 | 0.2 | 8 | 1.5 | 60 | 28 | 712 |
| Example 33 | 1.8 | 0.2 | 8 | 3 | 60 | 26 | 700 |
| Example 34 | 1.8 | 0.2 | 8 | 0.2 | 60 | 24 | 719 |
| Example 35 | 1.8 | 0.2 | 8 | 4 | 60 | 26 | 690 |
| Example 36 | 1.8 | 0.2 | 8 | 2 | 90 | 27 | 715 |
| Example 37 | 1.8 | 0.2 | 8 | 2 | 110 | 27 | 724 |
| Example 38 | 1.8 | 0.2 | 8 | 2 | 160 | 27 | 708 |
| Example 39 | 1.8 | 0.2 | 8 | 2 | 20 | 24 | 690 |
| Example 40 | 1.8 | 0.2 | 8 | 2 | 200 | 27 | 695 |

From Table 3, it can be seen that: from Example 1 and 17 to 21, it can be seen that: by specifying 0.2 mm ≤ L1 ≤ 1.8 mm, the energy density of the battery and the structural strength of the electrode plate meet the standards.

From Example 1 and Examples 22 to 25, it can be seen that: by specifying 0 < L2 ≤ 1.5 mm, the energy density of the battery and the structural strength of the electrode plate meet the standards.

From Example 1 and Examples 26 to 30, it can be seen that: by specifying 4 µm ≤ H1 ≤ 20 µm, the energy density of the battery and the structural strength of the electrode plate meet the standards.

From Example 1 and Examples 31 to 35, it can be seen that: by specifying 0.5 µm ≤ H2 ≤ 3 µm, the energy density of the battery and the structural strength of the electrode plate meet the standards.

From Example 1 and Examples 36 to 40, it can be seen that: by specifying 60 µm ≤ H3 ≤ 160 µm, the energy density of the battery and the structural strength of the electrode plate meet the standards.

It should be noted that test effects obtained using L3 as a test parameter are similar to test results obtained using L1 as a test parameter. Therefore, for the test results using L3 as a test parameter, reference may be made to Example 1 and Examples 17 to 21, and test effects obtained using L4 as a test parameter are similar to test effects using L2 as a test parameter. Therefore, for the test results obtained using L4 as a test parameter, reference may be made to Example 1 and Examples 22 to 25. Additionally, those skilled in the art can make other changes within the spirit of this application, and these changes made in accordance with the spirit of this application should be included within the scope disclosed by this application.

## Claims

1. An electrode plate, wherein the electrode plate comprises:
a current collector, wherein the current collector comprises a support layer, as well as a first conductive layer and a second conductive layer disposed on two sides of the support layer in a first direction, and the first direction is a thickness direction of the current collector;
two active material layers, wherein one active material layer is disposed on a side of the first conductive layer facing away from the support layer, and the other active material layer is disposed on a side of the second conductive layer facing away from the support layer; and
two transition layers, wherein one transition layer is disposed between at least a portion of the first conductive layer and the corresponding active material layer, and the other transition layer is disposed between at least a portion of the second conductive layer and the corresponding active material layer;
wherein the active material layer comprises active material particles, an average particle size of the active material particles is 5 µm to 20 µm; and
the transition layer comprises solid particles, wherein the solid particles comprise at least one of aluminum oxide, silicon oxide, silicon carbide, tin oxide, indium oxide, titanium dioxide, cobalt oxide, chromium trioxide, boehmite, amorphous carbon, lithium phosphorus oxynitride, and titanium diboride, and an average particle size of the solid particles is 500 nm to 1500 nm.

2. The electrode plate according to claim 1, wherein along a second direction, the transition layer protrudes beyond a peripheral edge of the corresponding active material layer, and the second direction is perpendicular to the first direction.

3. The electrode plate according to claim 2, wherein the average particle size of the active material particles is 5 µm to 15 µm, and the average particle size of the solid particles is 500 nm to 1000 nm.

4. The electrode plate according to claim 3, wherein the average particle size of the active material particles is 10 µm to 15 µm, and the average particle size of the solid particles is 800 nm to 1000 nm.

5. The electrode plate according to claim 1, wherein a compacted density of the active material layer is 3 g/cm³ to 4.5 g/cm³, and a compacted density of the transition layer is 1.6 g/cm³ to 3 g/cm³.

6. The electrode plate according to claim 5, wherein the compacted density of the active material layer is 4.1 g/cm³ to 4.3 g/cm³, and the compacted density of the transition layer is 2.2 g/cm³ to 2.4 g/cm³.

7. The electrode plate according to any one of claims 1, 4, and 6, wherein the transition layer comprises a connecting portion and an extending portion connected to each other; and along the first direction, a projection of the connecting portion overlaps with a projection of the corresponding active material layer, a projection of the extending portion surrounds a peripheral side of a projection of the corresponding active material layer, and the projection of the extending portion is further located within a projection of the current collector.

8. The electrode plate according to claim 7, wherein the connecting portion is provided with a through hole extending through the connecting portion along the first direction, the active material layer passes through the through hole and is connected to the corresponding first conductive layer or second conductive layer, and along the first direction, a projection of the through hole is located within a projection range of the corresponding active material layer.

9. The electrode plate according to claim 8, wherein along the first direction, a projection overlap region of the connecting portion and the corresponding active material layer comprises an inner periphery and an outer periphery, the outer periphery surrounds a peripheral side of the inner periphery, and a distance L5 between the inner periphery and the outer periphery satisfies: 0 < L5 ≤ 1 mm.

10. The electrode plate according to claim 9, wherein 0 < L5 ≤ 0.5 mm.

11. The electrode plate according to claim 2, wherein the current collector comprises two first end surfaces disposed opposite each other along the second direction, the active material layer comprises two second end surfaces disposed opposite each other along the second direction, and the transition layer comprises two third end surfaces disposed opposite each other along the second direction; and
along the second direction, among the first end surface, the second end surface, and the third end surface located on one side of the active material layer, a distance L1 between the first end surface and the third end surface satisfies: 0.2 mm ≤ L1 ≤ 1.8 mm, and a distance L2 between the second end surface and the third end surface satisfies: 0 < L2 ≤ 1.5 mm.

12. The electrode plate according to claim 11, wherein 0.4 mm ≤ L1 ≤ 0.6 mm, and 0.2 mm ≤ L2 ≤ 0.5 mm.

13. The electrode plate according to claim 11, wherein the current collector comprises two fourth end surfaces disposed opposite each other along a third direction, the active material layer comprises two fifth end surfaces disposed opposite each other along the third direction, and the transition layer comprises two sixth end surfaces disposed opposite each other along the third direction, wherein the first direction, the second direction, and the third direction are perpendicular to each other; and
along the third direction, among the fourth end surface, the fifth end surface, and the sixth end surface located on another side of the active material layer, a distance L3 between the fourth end surface and the sixth end surface satisfies: 0.2 mm ≤ L3 ≤ 1.8 mm, and a distance L4 between the fifth end surface and the sixth end surface satisfies: 0 < L4 ≤ 1.5 mm.

14. The electrode plate according to claim 12, wherein 0.4 mm ≤ L3 ≤ 0.6 mm, and 0.2 mm ≤ L4 ≤ 0.5 mm.

15. The electrode plate according to claim 1, wherein along the first direction, a thickness H1 of the current collector satisfies: 4 µm ≤ H1 ≤ 16 µm, a thickness H2 of the transition layer satisfies: 0.5 µm ≤ H2 ≤ 3 µm, and a thickness H3 of the active material layer satisfies: 60 µm ≤ H3 ≤ 160 µm.

16. The electrode plate according to claim 15, wherein 7 µm ≤ H1 ≤ 9 µm, 1 µm ≤ H2 ≤ 1.5 µm, and 90 µm ≤ H3 ≤ 110 µm.

17. The electrode plate according to any one of claims 1, 4, 12, and 16, wherein a resistance R of the transition layer satisfies: 1 mohm ≤ R ≤ 20 mohm.

18. A battery cell, comprising an electrode assembly, wherein the electrode assembly comprises the electrode plate according to any one of claims 1 to 17.

19. An electric device, comprising the electrode plate according to any one of claims 1 to 17 or the battery cell according to claim 18.
